# EUROPÄISCHE PATENTSCHRIFT

(11) **EP 2 728 236 B1**
(45) Veröffentlichungstag und Bekanntmachung des Hinweises auf die Patenterteilung: **19.04.2017**
(21) Anmeldenummer: 13177254.3
(22) Anmeldetag: 19.07.2013
(51) Int. Cl.: F16L 37/084, F16L 37/098

(54) **Schnellkupplung**
Quick connector coupling
Accouplement rapide

(30) Priorität: 05.11.2012 US 201261722665 P
(43) Veröffentlichungstag der Anmeldung: 07.05.2014
(73) Patentinhaber: TI Automotive (Fuldabrück) GmbH, 34277 Fuldabrück (DE)
(72) Erfinder: Barthel, Iris, 34270 Schauenburg (DE); Bol, Alexander, 34225 Baunatal, Guntershausen (DE); Bube, Kay, 36277 Schenklengsfeld (DE); Jensen, Hans, 73265 Dettingen unter Teck (DE); Pepe, Richard M., Macomb, Michigan, 48044 (US)
(74) Vertreter: Rohmann, Michael

(56) Entgegenhaltungen:
- EP-A1- 0 665 401
- EP-A2- 0 722 063
- US-A- 3 873 062
- US-B1- 6 467 816

## Beschreibung

Die Erfindung betrifft eine Schnellkupplung zur Herstellung einer trennbaren Verbindung in einer Fluidleitung.

Schnellkupplungen der vorstehend genannten Art sind aus der Praxis grundsätzlich bekannt. Diese Schnellkupplungen werden beispielsweise in Fluidleitungssystemen in Kraftfahrzeugen eingesetzt und müssen über einen langen Zeitraum hinweg und unter verschiedenen äußeren Bedingungen eine zuverlässige und fluiddichte Verbindung zwischen zwei Leitungen bereitstellen. Nachteilig bei den aus der Praxis bekannten Schnellkupplungen ist, dass diese einen komplexen Aufbau aufweisen, aufwendig zu montieren sind und ein großes Volumen aufweisen. Dadurch ist es teilweise schwierig, die aus der Praxis bekannten Schnellkupplungen in schwer zugänglichen bzw. beengten Stellen in einem Fahrzeug einzusetzen. Eine derartige Kupplung ist beispielsweise aus der EP0665401 A1 bekannt.

Der Erfindung liegt daher das technische Problem zugrunde, eine Schnellkupplung anzugeben, die sich durch eine einfache Montierbarkeit, einen kompakten Aufbau und eine hohe Funktionssicherheit auszeichnet.

Zur Lösung des technischen Problems lehrt die Erfindung eine Schnellkupplung zur Herstellung einer trennbaren Verbindung in einer Fluidleitung, mit einem Steckverbinderkörper, wobei der Steckverbinderkörper aus zumindest zwei separaten Teilen, nämlich einem Kopfteil und einem Dichtungsteil, gebildet ist, wobei ein Abschnitt des Kopfteils im montierten Zustand der Schnellkupplung bereichsweise in das Dichtungsteil eingeführt ist, wobei der Steckverbinderkörper eine Durchgangsbohrung definiert, welche Durchgangsbohrung sich von einer kopfteilseitigen Steckelementaufnahmeöffnung des Steckverbinderkörpers aus bis zu einer dichtungsteilseitigen Austrittsöffnung erstreckt,
einem Steckelement, welches Steckelement sich im montierten Zustand durch die Steckelementaufnahmeöffnung in die Durchgangsbohrung hinein erstreckt, wobei das Steckelement eine vorzugsweise zylindrische Dichtungsfläche und eine ringförmige Stauchung aufweist, wobei die Stauchung über die Dichtungsfläche übersteht,
einem Halter zum lösbaren Befestigen des Steckelements an bzw. in dem Steckverbinderkörper,
dadurch gekennzeichnet, dass
der Halter als Ring ausgebildet ist, welcher Halter den Steckverbinderkörper und vorzugsweise das Kopfteil umgibt, wobei der Halter zumindest ein Halteelement aufweist, welches Halteelement durch eine dem Halteelement zugeordnete Aussparung des Steckverbinderkörpers, vorzugsweise des Kopfteils, greift, wobei das Halteelement im montierten Zustand mit der Stauchung des Steckelements mit der Maßgabe zusammenwirkt, dass das Steckelement in dem Steckverbinderkörper gesichert ist. Die erfindungsgemäße Schnellkupplung wird beispielsweise in Fluidleitungssystemen von Brennkraftmaschinen, insbesondere von Fahrzeugen verwendet. Möglich ist beispielsweise der Einsatz der Schnellkupplung in einem Bremsleitungssystem, Kraftstoffleitungssystem und/oder Harnstofflösungsleitungssystem. Es hat sich als vorteilhaft herausgestellt, dass das Dichtungsteil aus einem elektrisch leitfähigem Kunststoff (ESD-Kunststoff) gefertigt ist.

Die Durchgangsbohrung ist vorzugsweise kreisrund ausgebildet und weist eine Längsachse bzw. Mittelachse auf, die sich von der Steckelementaufnahmeöffnung (Eingangsöffnung) zu der Austrittsöffnung erstreckt. Zweckmäßigerweise ist die Austrittsöffnung an einem dem Kopfteil abgewandten Ende des Dichtungsteils angeordnet. Besonders bevorzugt ist das Steckelement als Rohr mit einem Strömungskanal ausgebildet, wobei eine Längsachse des Strömungskanals im montierten Zustand vorzugsweise mit der Mittelachse der Durchgangsbohrung fluchtet bzw. ungefähr fluchtet. Es liegt im Rahmen der Erfindung, dass die Stauchung als ein auf der Dichtungsfläche des Steckelements angeordneter Kragen ausgebildet ist.

Der Halter bzw. der als Ring ausgestaltete Halter ist vorzugsweise oval ausgebildet. Grundsätzlich ist es möglich, den Ring mit einem viereckigen bzw. rechteckigen Querschnitt auszubilden, wobei die Ecken des Vierecks bzw. Rechtecks abgerundet sind. Grundsätzlich ist es möglich, den Ring kreisrund auszubilden.

Das Halteelement des Halters verfügt vorzugsweise über eine dichtungsteilseitige Rückhaltefläche, welche Rückhaltefläche zweckmäßigerweise quer zur Längsachse der Durchgangsbohrung der angeordnet ist. Es liegt im Rahmen der Erfindung, dass die Rückhaltefläche an einer dichtungsteilseitigen Stirnseite des Halteelements angeordnet ist. Gemäß einer Ausführungsform liegt die Rückhaltefläche des Halteelements im montierten Zustand an der Stauchung, insbesondere an einer eingangsöffnungsseitigen Anlagefläche der Stauchung, des Steckelements an. Besonders bevorzugt ist eine Anlagefläche der Stauchung ringförmig ausgebildet und im montierten Zustand quer bzw. ungefähr quer zur Mittelachse der Durchgangsbohrung orientiert. Vorteilhafterweise weist das Halteelement eine Kontaktfläche auf, mit der das Halteelement im montierten Zustand an einer vorzugsweise zylindrischen Verriegelungsfläche des Steckelements anliegt. Verriegelungsfläche meint im Rahmen der Erfindung einen Abschnitt der Dichtungsfläche des Steckelements, welcher Abschnitt sich im montierten Zustand ausgehend von der Stauchung in Richtung des eingangsöffnungsseitigen Endes des Steckelements erstreckt. Besonders bevorzugt ist die Kontaktfläche komplementär zu der Verriegelungsfläche des Steckelements ausgebildet. Die Kontaktfläche liegt besonders bevorzugt lediglich an einem Abschnitt der Verriegelungsfläche des Steckelements an. Mit anderen Worten umgibt die Kontaktfläche des Halteelements die Verriegelungsfläche des Steckelements lediglich über einen Teil des Umfangs des Steckelements.

Es hat sich bewährt, dass die Durchgangsbohrung in dem Dichtungsteil einen Dichtungsabschnitt aufweist, in welchem Dichtungsabschnitt zumindest ein Dichtungselement aufgenommen ist. Das Dichtungselement liegt im montierten Zustand der Schnellkupplung vorzugsweise fluiddicht an der bevorzugt zylindrischen Dichtungsfläche des Steckelements an. Gemäß einer Ausführungsform weist das Steckelement ein Einführende mit einer konisch ausgebildeten oder kugelschalenabschnittsförmigen Stirnseite auf. Auf diese Weise ist das Steckelement problemlos in die Durchgangsbohrung und/oder in das vorzugsweise als O-Ring ausgebildete Dichtungselement einführbar.

Es empfiehlt sich, dass der Halter zwei und vorzugsweise lediglich zwei Halteelemente aufweist, wobei jedem Halteelement jeweils eine Aussparung in dem Steckverbinderkörper zugeordnet ist, durch welche Aussparung die Halteelemente im montierten Zustand jeweils greifen und mit der Stauchung des Steckelementes wechselwirken, so dass das Steckelement in dem Steckverbinderkörper gesichert ist. Gemäß einer bevorzugten Ausführungsform sind die vorzugsweise zwei Halteelemente einander gegenüberliegend bzw. diametral an dem Halter angeordnet. Abgesehen von der Position an dem Ring bzw. Halter sind die Halteelemente zweckmäßigerweise identisch bzw. im Wesentlichen identisch ausgebildet. Bevorzugt ist der Halter mit dem an den Ring angeschlossenen Halteelement bzw. mit den daran angeschlossenen Halteelementen derart ausgebildet, dass das Haltelement bzw. die Halteelemente in radialer Richtung in Bezug auf die Mittelachse der Durchgangsbohrung federnd gelagert sind. Vorteilhafterweise wirkt eine Federkraft auf das Halteelement bzw. die Halteelemente, durch welche Federkraft das Halteelement bzw. die Halteelemente in Richtung der Mittelachse der Durchgangsbohrung gedrückt wird bzw. werden.

Empfohlenermaßen ist der Halter abgesehen von dem die Aussparung bzw. von den die Aussparungen des Kopfteils durchdringenden Halteelements bzw. Halteelementen vollständig in radialer Richtung außerhalb des Steckverbinderkörpers bzw. Kopfteils angeordnet. Vorzugsweise wird der Steckverbinderkörper zusammengesetzt, indem zunächst der Halter auf dem Kopfteil angeordnet wird. Zweckmäßigerweise wird dann das Kopfteil an dem Dichtungsteil fixiert, so dass der Halter besonders bevorzugt unverlierbar auf dem Steckverbinderkörper, insbesondere dem Kopfteil gehalten ist. Der Zustand, in dem das Kopfteil mit dem Dichtungsteil verbunden und der Halter auf dem Steckverbinderkörper gesichert ist, wird im Rahmen der Erfindung als vormontierter Zustand bezeichnet. Im vormontierten Zustand ist der Halter besonders bevorzugt unverlierbar auf dem Steckverbinderkörper gesichert bzw. lediglich in axialer Richtung in Bezug auf die Durchgangsbohrung gegenüber dem Steckverbinderkörper verschiebbar.

Zweckmäßigerweise weist das Kopfteil an einem dem Dichtungsteil abgewandten Ende einen die Steckelementaufnahmeöffnung (Eingangsöffnung) umlaufenden Kragen auf, wobei der Halter im montierten und/oder vormontierten Zustand zwischen dem Kragen und dem Dichtungsteil angeordnet ist. Der kopfteilseitige Kragen verhindert gemäß einer Ausführungsform ein Abziehen des Halters von dem Steckverbinderkörper. Eine Entfernung des Halters von dem Steckverbinderkörper ist im montierten und/oder vormontierten Zustand im Rahmen der Erfindung weder in axialer noch in radialer Richtung in Bezug auf die Durchgangsbohrung möglich. Zweckmäßigerweise weist der Kragen einen größeren Querschnitt bzw. eine größere Querschnittsfläche als das Kopfteil in einem Bereich auf, in welchem Bereich im montierten und/oder unmontierten Zustand der Halter angeordnet ist. Es hat sich als vorteilhaft herausgestellt, dass der kopfteilseitige Kragen den Halter vor einer mechanischen Beschädigung schützt.

Es ist möglich, dass an einem äußeren Rand einer dichtungsteilseitigen Oberfläche des Kragens ein Schutzrand ausgebildet ist, welcher Schutzrand über die dichtungsteilseitige Oberfläche übersteht. Gemäß einer bevorzugten Ausführungsform verdeckt der Schutzrand den Halter teilweise und bevorzugt lediglich teilweise. Empfohlenermaßen erstreckt sich der Schutzrand unterbrechungsfrei entlang des äußeren Rands des Kragens. Es empfiehlt sich, dass der Schutzrand Bereiche des Halters, in denen vorzugsweise Betätigungseinrichtungen zum Deformieren des Halters angeordnet sind, zumindest teilweise frei lässt bzw. nicht verdeckt. Auf diese Weise ist eine problemlose Bedienbarkeit der Schnellkupplung sichergestellt. Zweckmäßigerweise wird der Halter durch den Kragen vor mechanischen Beschädigungen und/oder Verschmutzungen geschützt.

Zweckmäßigerweise überdeckt der kopfteilseitige Kragen den Halter vorzugsweise im montierten Zustand vollständig bzw. im Wesentlichen vollständig. Überdecken meint im Rahmen der Erfindung, dass der Kragen in einer Draufsicht auf den Kragen den Halter vollständig bzw. im Wesentlichen vollständig verdeckt. Die Querschnittsfläche des kopfteilseitigen Kragens ist vorteilhafterweise so dimensioniert, dass der Halter für einen Betrachter in einer Draufsicht auf die Schnellkupplung nicht sichtbar ist. Es liegt im Rahmen der Erfindung, dass der Kragen eine ovale bzw. ungefähr ovale Querschnittsfläche aufweist, wobei in der Querschnittsfläche des kopfteilseitigen Kragens die Einführöffnung für das Einsteckelement angeordnet ist.

Gemäß einer Ausführungsform weist das Kopfteil zumindest zwei Führungen auf, zwischen welchen Führungen das Halteelement im vormontierten und/oder montierten Zustand positioniert ist. Besonders bevorzugt sind jedem Halteelement jeweils zwei Führungen zugeordnet. Die Führungen können beispielsweise als Führungsstege ausgebildet sein, zwischen denen das Halteelement bzw. die Halteelemente mit der Maßgabe geführt sind, dass der Halter gegenüber dem Kopfteil bzw. dem Steckverbinderkörper unverdrehbar ist. Empfohlenermaßen ist der Halter verdrehsicher am Steckverbinderkörper gelagert.

Vorteilhafterweise weist das bzw. jedes Halteelement eine schräg zu einer Mittelachse der Durchgangsbohrung orientierte Einführfläche auf, welche Einführfläche derart ausgebildet ist, dass das Halteelement beim Einführen des Steckelements in die Durchgangsbohrung durch die Stauchung radial nach außen drückbar ist. Gemäß einer bevorzugten Ausführungsform erstreckt sich die Einführfläche ausgehend von einem durchgangsöffnungsseitigen Ende der Einführfläche hin zu einem austrittsöffnungsseitigen Ende der Einführfläche in radialer Richtung schräg nach innen bzw. in Richtung der Mittelachse und der Austrittsöffnung der Durchgangsbohrung. Zweckmäßigerweise wird das Steckelement zur Herstellung des montierten Zustands in den mit dem Halter versehenen, vormontierten Steckverbinderkörper eingeführt. Beim Einführen wird die Stauchung des Steckelements gemäß einer Ausführungsform in Kontakt mit der Einführfläche bzw. mit den Einführflächen gebracht, so dass das Halteelement bzw. die Halteelemente in radialer Richtung nach außen bzw. von der Mittelachse der Durchgangsbohrung weggedrückt wird bzw. werden. Sobald die Stauchung des Steckelements zweckmäßigerweise an dem Halteelement bzw. an den Halteelementen vorbei bewegt ist, wird das Halteelement bzw. werden die Halteelemente, vorzugsweise durch die Federkraft beaufschlagt, radial nach innen in Richtung der Mittelachse gedrückt, so dass die Rückhaltefläche des Halteelements bzw. die Rückhalteflächen der Halteelemente zur Anlage an die Anlagefläche der Stauchung des Steckelements gebracht werden. Das Halteelement bzw. die Halteelemente sind gemäß einer Ausführungsform derart an den Halter angeschlossen, dass die Einführfläche bzw. die Einführflächen des Halteelements bzw. der Halteelemente in einen Ringinnenraum des als Ring ausgebildeten Halters ragt bzw. ragen. Das Halteelement bzw. die Halteelemente ragt bzw. ragen ausgehend von dem Ring ausschließlich in den von dem Ring definierten Ringinnenraum.

Gemäß einer Ausführungsform weist zumindest ein Halteelement ein Sicherungselement auf, welches Sicherungselement das Halteelement im montierten Zustand gegen eine von der Mittelachse der Durchgangsbohrung wegweisende, radiale Verlagerung sichert. Vorzugsweise weist jedes an den Halter angeschlossene Halteelement jeweils ein Sicherungselement auf. Es ist möglich, dass durch einen Druck in einem Fluidsystem, in welches Fluidsystem die Schnellkupplung integriert ist, das Steckelement gegen den Kragen des Kopfteils gedrückt wird. Vorteilhafterweise wird der Halter von dem Steckelement durch eine Druckbeaufschlagung, beispielsweise durch das Fluid des Fluidsystems, gegen den kopfteilseitigen Kragen gedrückt. Das Sicherungselement des jeweiligen Halteelements wirkt vorteilhafterweise mit dem Steckverbinderkörper zusammen, wobei der Steckverbinderkörper, insbesondere der kopfteilseitige Kragen, verhindert, dass das Halteelement bzw. die Halteelemente vorzugsweise bei einer Druckbeaufschlagung durch das Fluidsystem radial nach außen bzw. von der Mittelachse wegbewegt wird bzw. werden und dass das Steckelement aus dem Steckverbinderkörper entfernbar ist. Besonders bevorzugt ist das Sicherungselement als Sicherungsvorsprung ausgebildet, wobei der Sicherungsvorsprung im montierten Zustand an einer durchgangsbohrungsseitigen Ringfläche des Kopfteils bzw. des Kragens anliegt. Der Sicherungsvorsprung steht gemäß einer Ausführungsform über eine kragenseitige Oberfläche bzw. Stirnseite eines Halteelements bzw. der Halteelemente über. Durch die Anlage des Sicherungsvorsprungs eines Halteelements an der durchgangsbohrungsseitigen Ringfläche des Kopfteils bzw. des Kragens wird vorteilhafterweise ausgeschlossen, dass das Halteelement bzw. die Halteelemente in radialer Richtung von der Mittelachse der Durchgangsbohrung wegbewegbar ist bzw. sind.

Zweckmäßigerweise weist der Halter zumindest eine Betätigungseinrichtung auf, wobei durch eine Kraftbeaufschlagung der Betätigungseinrichtung der Halter derart deformierbar ist, dass das Halteelement in radialer Richtung von der Mittelachse der Durchgangsbohrung wegbewegbar ist. Die Betätigungseinrichtung ist vorteilhafterweise als Griffplatte bzw. als Drückplatte ausgebildet. Besonders bevorzugt verfügt der Halter über zwei, insbesondere lediglich zwei Betätigungseinrichtungen, die gegenüberliegend bzw. diametral am Ring bzw. am Halter angeordnet sind. Wird eine Kraft auf die Betätigungseinrichtung bzw. die Betätigungseinrichtungen vorzugsweise in radialer Richtung bzw. in Richtung der Mittelachse der Durchgangsbohrung ausgeübt, wird der von dem Ring gebildete Halter deformiert, bevorzugt flachgedrückt, so dass der Abstand zwischen der Betätigungseinrichtung und der Mittelachse besonders bevorzugt vermindert wird. Das am Ring angeschlossene Halteelement wird bzw. die am Ring angeschlossenen Halteelemente werden vorzugsweise durch die Deformation des Rings radial nach außen bzw. von der Mittelachse wegbewegt, so dass das Steckelement freigegeben wird. Der Halter ist derart deformierbar, dass durch die Deformierung des Halters der Abstand zwischen einem Halteelement und dem Steckelement so groß ist, dass die Stauchung an dem Halteelement vorbei in Richtung des Kragens gleiten kann.

Im montierten Zustand sind das Kopfteil und der Halter relativ zueinander in axialer Richtung derart verschiebbar, dass das Sicherungselement des Halters von dem Kopfteil, insbesondere von der Ringfläche des Kragens bzw. des Kopfteils, lösbar, vorzugsweise außer Eingriff bringbar ist, wobei lediglich in einem gelösten Zustand eine radiale Verlagerung des Halteelements bzw. der Halteelemente durch eine Kraftbeaufschlagung der Betätigungseinrichtung derart erfolgt, dass das Halteelement bzw. die Halteelemente die Stauchung des Steckelements freigibt bzw. freigeben. Vorzugsweise ist der Halter im montierten Zustand in Richtung des Dichtungsteils bzw. von dem Kragen wegbewegbar. Zweckmäßigerweise wechselwirkt der Halter bzw. das Sicherungselement im gelösten Zustand nicht mit dem kopfteilseitigen Kragen.

Es liegt im Rahmen der Erfindung, dass das Kopfteil mit dem Dichtungsteil verrastet ist. Zweckmäßigerweise verfügt das Kopfteil über Rastelemente, die mit dichtungsteilseitigen, komplementären Rastelementen zusammenwirken. Zur Herstellung der Rastverbindung zwischen dem Kopfteil und dem Dichtungsteil wird der empfohlenermaßen zylinderförmige bzw. im Wesentlichen zylinderförmige Abschnitt des Kopfteils in die Durchgangsbohrung des Dichtungsteils eingeführt. Der in das Dichtungsteil eingeführte Abschnitt des Kopfteils ist vorzugsweise als das Rastelement bzw. die Rastelemente tragender Einführabschnitt ausgebildet. Bevorzugt weist das Dichtungsteil zumindest eine Rastöffnung auf, in welche Rastöffnung im montierten Zustand ein kopfteilseitiger Rastvorsprung zur Sicherung des Kopfteils an dem Dichtungsteil greift. Besonders bevorzugt verfügt eine Wandung des Dichtungsteils über zwei Rastöffnungen, welche Rastöffnungen vorzugsweise diametral in der vorzugsweise zylinderförmigen Wandung des Dichtungsteils angeordnet sind. Es liegt im Rahmen der Erfindung, dass jeder Rastöffnung ein kopfteilseitiger Rastvorsprung zugeordnet ist. Durch Verlagern des Rastvorsprungs bzw. der Rastvorsprünge in Richtung der Mittelachse der Durchgangsbohrung ist es im Rahmen der Erfindung möglich, das Kopfteil von dem Dichtungsteil zu trennen und zweckmäßigerweise aus der dichtungsteilseitigen Durchgangsbohrung zu entfernen.

Gemäß einer Ausführungsform weist die Wandung des Dichtungsteils durchgangsbohrungsseitig zumindest ein Führungselement auf, welches Führungselement im montierten und/oder vormontierten Zustand mit einem kopfteilseitigen, komplementären Führungselement zur vorzugsweise verdrehsicheren Fixierung des Kopfteils an dem Dichtungsteil zusammenwirkt. Es ist möglich, dass das dichtungsteilseitige Führungselement als Führungsnut ausgebildet ist, in welche Führungsnut ein kopfteilseitiger Führungsvorsprung eingreift. Bevorzugt verfügt das Dichtungsteil über zumindest zwei Führungselemente. Die Anzahl der kopfteilseitigen, komplementären Führungselemente entspricht im Übrigen gemäß einer Ausführungsform der Anzahl der dichtungsteilseitigen Führungselemente.

Der Erfindung liegt die Erkenntnis zugrunde, dass sich die erfindungsgemäße Schnellkupplung durch einen vorteilhaft kompakten Aufbau bzw. ein kompaktes Design auszeichnet. Dadurch, dass bei der erfindungsgemäßen Schnellkupplung alle Teile miteinander verbunden sind und insbesondere der Halter, im vormontierten Zustand bereits unverlierbar auf dem Steckverbinderkörper gehalten ist, wird eine einfache Montierbarkeit sichergestellt. Die einfache, werkzeugfreie Montierbarkeit geht einher mit einer hohen Funktionssicherheit, da durch die erfindungsgemäße Ausbildung des Halters eine zuverlässige und ordnungsgemäße Montage der Schnellkupplung problemlos feststellbar ist. Folglich zeichnet sich die erfindungsgemäße Schnellkupplung durch eine hervorragende Bedienbarkeit aus, bei der keine externen Bauteile in die Schnellkupplung bei der Verbindungsherstellung eingeführt werden müssen.

Fernerhin zeichnet sich die erfindungsgemäße Schnellkupplung durch eine verbesserte Führung des Steckelements aus, was sich vorteilhaft auf die Stabilität und Robustheit der erfindungsgemäßen Schnellkupplung auswirkt.

Nachfolgend wird die Erfindung anhand einer lediglich ein Ausführungsbeispiel darstellenden Zeichnung genauer erläutert. Es zeigen in schematischer Darstellung:
- Fig. 1: eine Explosionsdarstellung einer erfindungsgemäßen Schnellkupplung,
- Fig. 2: einen Schnitt durch eine erfindungsgemäße Schnellkupplung im vormontierten Zustand,
- Fig. 3: eine erfindungsgemäße Schnellkupplung im vormontierten Zustand gemäß Fig. 2, die ausgehend von Fig. 2 um 90° gedreht ist,
- Fig. 4: einen Schnitt durch eine erfindungsgemäße Schnellkupplung im montierten Zustand,
- Fig. 5: eine Draufsicht auf die erfindungsgemäße Schnellkupplung gemäß Fig. 4,
- Fig. 6: eine Draufsicht gemäß Fig. 5, bei der ein Kragen eines Kopfteils der Übersichtlichkeit halber entfernt ist,
- Fig. 7: eine perspektivische, teilweise aufgebrochene Ansicht einer erfindungsgemäßen Schnellkupplung gemäß Fig. 4 und
- Fig. 8: eine Draufsicht gemäß Fig. 4, wobei der Halter zusammengedrückt ist.

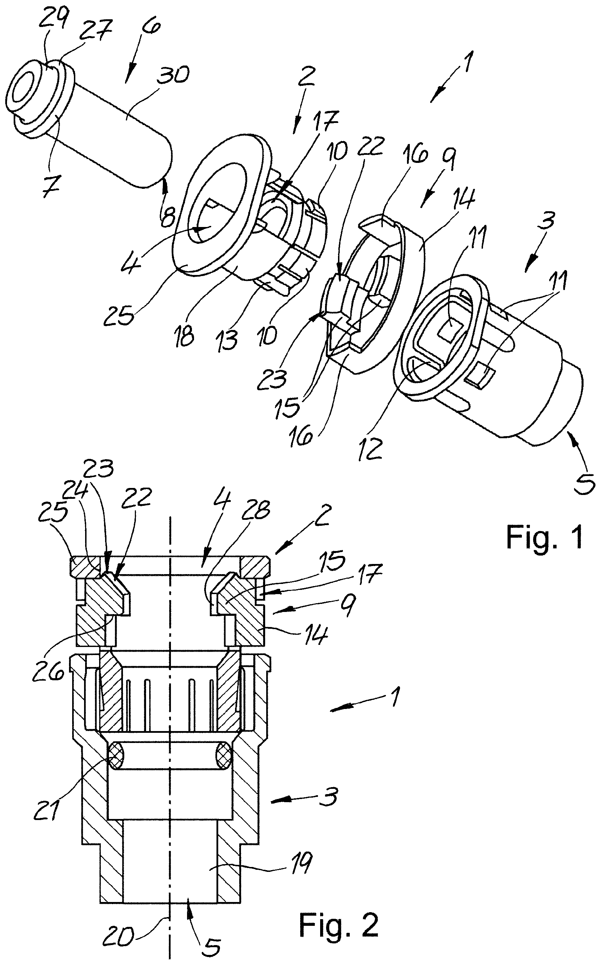

In Fig. 1 ist eine Schnellkupplung 1 dargestellt, die über ein Kopfteil 2 verfügt, welches Kopfteil 2 an einem Dichtungsteil 3 fixierbar ist. Das Kopfteil 2 weist eine Steckelementaufnahmeöffnung bzw. Eingangsöffnung 4 auf. Gemäß Fig. 1 verfügt das Dichtungsteil 3 an einem dem Kopfteil 3 abgewandten Ende über eine Austrittsöffnung 5. In die Eingangsöffnung 4 ist ein Steckelement 6 einführbar, welches Steckelement 6 mit einer ringförmigen Stauchung 7 ausgestattet ist. Zur Vereinfachung des Einführens des Steckelements 6 durch die Eingangsöffnung 4 in das Kopfteil 2 und das Dichtungsteil 3 ist die Stirnseite 8 des Steckelements 6 kugelschalenabschnittsförmig ausgebildet. Gemäß Fig. 1 verfügt die Schnellkupplung 1 über einen Halter 9, welcher Halter 9 im montierten Zustand das Kopfteil 2 vollständig umläuft.

Weiterhin ist in Fig. 1 dargestellt, dass das Kopfteil 2 gemäß dem Ausführungsbeispiel an einem Einführabschnitt, welcher Einführabschnitt im montierten bzw. vormontierten Zustand der Schnellkupplung 1 in das Dichtungsteil 3 eingeführt ist, über vier Rastvorsprünge 10 verfügt. Im montierten Zustand der Schnellkupplung 1 greifen die Rastvorsprünge 10 in korrespondierende Rastöffnungen 11 des Dichtungsteils 3. Durch das Eingreifen der Rastvorsprünge 10 in die korrespondierenden Rastöffnungen 11 ist das Kopfteil 2 an dem Dichtungsteil 3 fixiert. Vorzugsweise und gemäß Fig. 1 weist das Dichtungsteil 3 nutförmige Führungselemente 12 auf, in die im montierten Zustand als Vorsprünge 13 ausgebildete, komplementäre Führungselemente des Kopfteils 2 greifen. Gemäß dem Ausführungsbeispiel wird das Kopfteil 2 verdrehsicher an dem Dichtungsteil 3 fixiert.

Gemäß dem Ausführungsbeispiel verfügt der Halter 9 über einen Ring 14, an welchen Ring 14, wie unter anderem in Fig. 1 dargestellt ist, zwei Halteelemente 15 und zwei als Griffplatten 16 ausgebildete Betätigungseinrichtungen angeschlossen sind. Die Halteelemente 15 und die Griffplatten 16 sind jeweils so an dem Ring 14 angeordnet, dass die beiden Halteelemente 15 bzw. die beiden Griffplatten 16 jeweils diametral an dem Ring 14 angeordnet sind. In Fig. 1 ist gezeigt, dass die Halteelemente 15 ringinnenseitig bzw. in Richtung eines Ringinnenraumes an den Ring 14 angeschlossen sind. Aus der im montierten Zustand dem Betrachter zugewandten Oberfläche des Rings 14 stehen also gemäß dem Ausführungsbeispiel keine Konturen hervor.

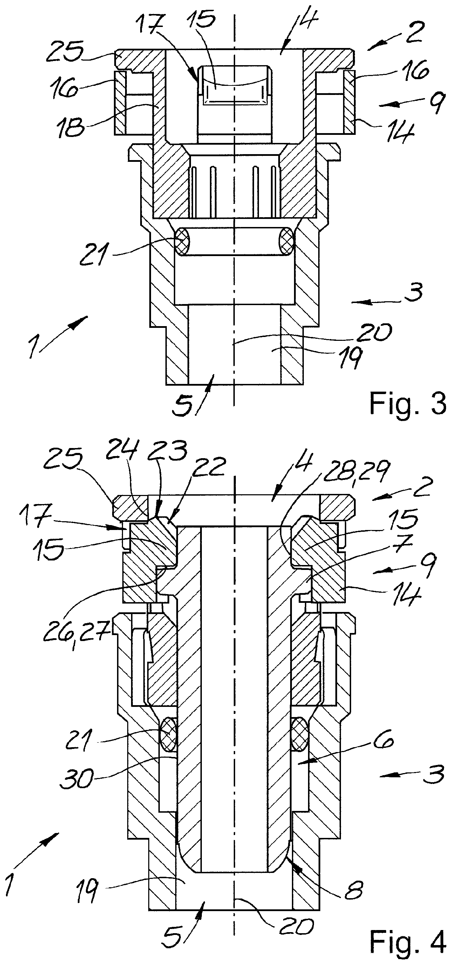

Im vormontierten Zustand, der in den Fig. 2 und 3 dargestellt ist, ist das Kopfteil 2 mit dem Dichtungsteil 3 verrastet. Insbesondere in Fig. 3 ist erkennbar, dass der Halter 9 bzw. der Ring 14 des Halters 9 das Kopfteil 2 umgibt. Das Kopfteil 2 weist gemäß dem Ausführungsbeispiel zwei Aussparungen 17 auf, durch die die Halteelement 15 durch eine Wandung 18 des Kopfteils 2 durchgreifen und sich in eine Durchgangsbohrung 19 der Schnellkupplung 1 erstrecken. In den Fig. 2 bis 4 ist eine Mittelachse 20 bzw. Längsachse der Durchgangsbohrung 19 strichpunktiert dargestellt. Gemäß den Fig. 2 bis 4 weist das Dichtungsteil 3 ein gemäß dem Ausführungsbeispiel als O-Ring ausgebildetes Dichtungselement 21 auf.

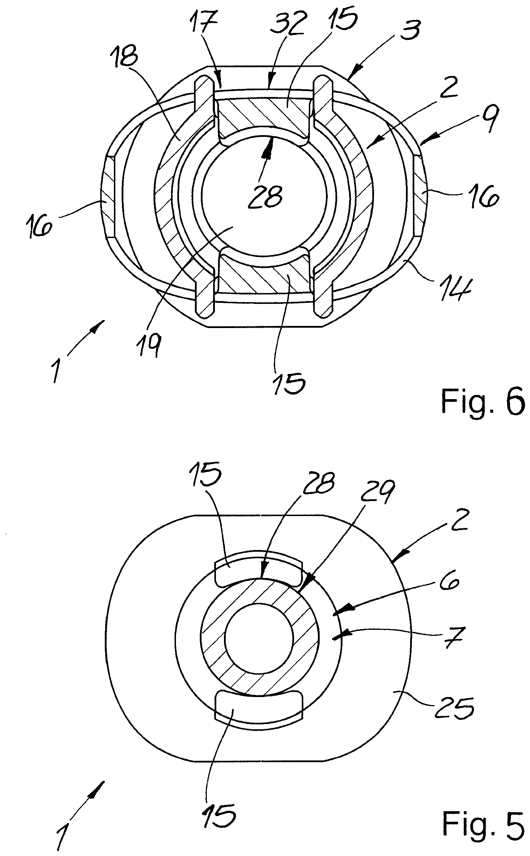

In Fig. 2 ist dargestellt, dass die Halteelemente 15 jeweils über eine Einführfläche 22 verfügen, welche Einführfläche ausgehend von einem eingangsöffnungsseitigen Ende der Einführflächen 22 hin zu einem austrittsöffnungsseitigen Ende der Einführfläche 22 in radialer Richtung schräg nach innen bzw. in Richtung der Mittelachse 20 und der Austrittsöffnung 5 des Dichtungsteils 3 der Durchgangsbohrung 19 orientiert sind. Das eingangsöffnungsseitige Ende der Einführflächen 22 ist gemäß den Fig. 2 bis 4 jeweils als Sicherungsvorsprung 23 ausgebildet. Die Sicherungsvorsprünge 23 liegen im vormontierten Zustand gemäß den Fig. 2 und 3 und im montierten Zustand gemäß Fig. 4 an einer durchgangsbohrungsseitigen Ringfläche 24 des Kopfteils 2 an. Die Ringfläche 24 ist eine durchgangsbohrungsseitige Oberfläche eines Kragens 25, welcher Kragen 25 eine dem Dichtungsteil 3 abgewandte Stirnseite des Kopfteils 2 bildet. In Fig. 5 ist dargestellt, dass der Kragen 25 derart bemessen ist, dass bei einer Draufsicht auf die Schnellkupplung 1 der Halter 9 für einen Betrachter unsichtbar ist.

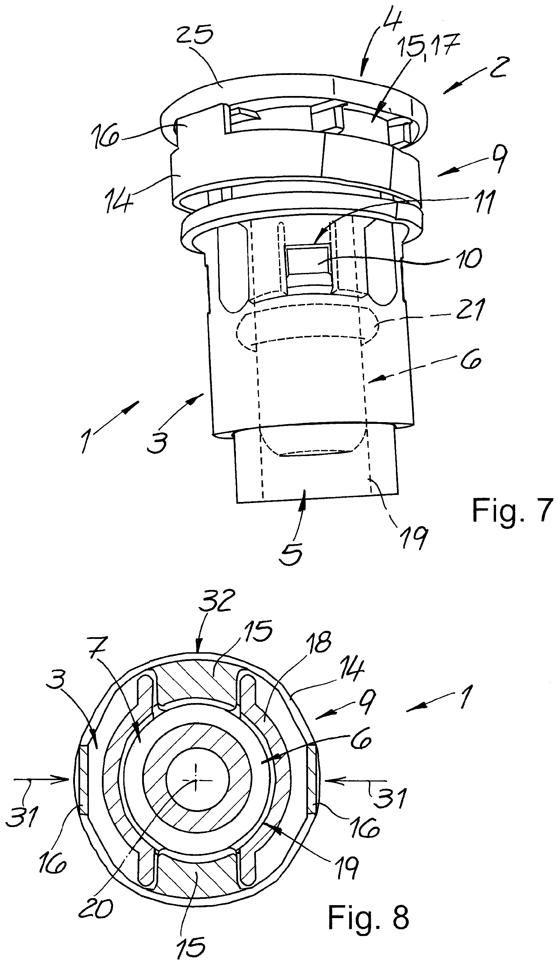

In Fig. 4 ist der montierte Zustand der Schnellkupplung 1 dargestellt. Das Steckelement 6 mit der Stauchung 7 ist vollständig in den aus dem Kopfteil 2 und dem Dichtungsteil 3 gebildeten Steckverbinderkörper eingeführt. Beim Einführen des Steckelements 6 in dem Steckverbinderkörper wird die Stauchung 7 in Kontakt mit den Einführflächen 22 gebracht, woraufhin bei einer weiteren Bewegung des Steckelements 6 in Richtung des Dichtungsteils 3 die Halteelemente 15 des Halters 9 in radialer Richtung in Bezug auf die Durchgangsbohrung 19 auseinandergedrückt werden. Durch den Ring 14 sind die Halteelemente 15 mit einer Federkraft beaufschlagt, durch welche Federkraft die Halteelemente 15 in Richtung der Mittelachse 20 der Durchgangsbohrung 19 gedrückt werden. Sobald die Stauchung 7 des Steckelements 6 an den Halteelementen 15 vorbeigeglitten ist, federn die Halteelemente 15 bedingt durch die Federkraft in die in den Fig. 2 bis 4 dargestellte Position zurück. Rückhalteflächen 26 der Halteelemente 15 liegen dann an einer ringförmigen Anlagefläche 27 der Stauchung 7 an, wodurch ein Herausziehen des Steckelements 6 aus dem Steckverbinderkörper verhindert wird. Gleichzeitig verhindern die Sicherungsvorsprünge 23 ein unbeabsichtigtes Deformieren des Halters 9 bzw. Auseinanderdrücken der Halteelemente 15 und verhindern ebenfalls ein unbeabsichtigtes Lösen des Halters 9. In den Fig. 5 und 6 ist dargestellt, dass eine halterseitige Kontaktfläche 28 an einer zylinderförmigen Verriegelungsfläche 29 des Steckelements 6 anliegt. Die halterseitige Kontaktfläche 28 liegt gemäß dem Ausführungsbeispiel lediglich an einem Bereich bzw. Umfangsabschnitt der Verriegelungsfläche 29 des Steckelements 6 an. Der montierte Zustand der Schnellkupplung 1, bei der in dem Steckverbinderkörper ein Steckelement 6 aufgenommen ist, ist ergänzend in Fig. 7 dargestellt. Eine dichtungsteilseitige, zylinderförmige Dichtfläche 30 des Steckelements 6 liegt im montierten Zustand, insbesondere gemäß Fig. 4, fluiddicht an dem Dichtungselement 21 an.

In Fig. 8 ist ausgehend von Fig. 6 die Deformierung des Halters 9 dargestellt. Durch eine mittels der Pfeile 31 dargestellte Krafteinwirkung in Richtung der Mittelachse 20 auf den Halter 9 wird der Ring 14 im Bereich der Griffplatten 16 verformt. Infolgedessen werden die Abschnitte 32, an die vorzugsweise und gemäß dem Ausführungsbeispiel durchgangsbohrungsseitig die Halteelemente 15 angeschlossen sind, in radialer Richtung von der Durchgangsbohrung 19 wegbewegt. Die Halteelemente 15 sind gemäß Fig. 8 derart von der Mittelachse 20 der Durchgangsbohrung 19 wegbewegt, dass der Abstand zwischen den Halteelementen 15 so groß ist wie der Durchmesser der ringförmigen Stauchung 7. In dem in Fig. 8 dargestellten, gelösten Zustand ist eine Entfernung des Steckelementes 6 aus dem von dem Kopfteil 2 und dem Dichtungsteil 3 gebildeten Steckverbinderkörper möglich. Sobald die Krafteinwirkung 31 auf die Griffplatten 16 beendet ist, federt der Ring 14 des Halters in die in den Fig. 1 bis 7 dargestellte Konfiguration zurück.

## Patentansprüche

1. Schnellkupplung zur Herstellung einer trennbaren Verbindung in einer Fluidleitung mit
einem Steckverbinderkörper, wobei der Steckverbinderkörper aus zumindest zwei separaten Teilen, nämlich einem Kopfteil (2) und einem Dichtungsteil (3), gebildet ist, wobei der Steckverbinderkörper eine Durchgangsbohrung (19) definiert, welche Durchgangsbohrung (19) sich von einer kopfteilseitigen Steckelementaufnahmeöffnung (4) des Steckverbinderkörpers aus bis zu einer dichtungsteilseitigen Austrittsöffnung (5) erstreckt,
einem Steckelement (6), welches Steckelement sich im montierten Zustand durch die Steckelementaufnahmeöffnung (4) in die Durchgangsbohrung (19) hinein erstreckt, wobei das Steckelement (6) eine vorzugsweise zylindrische Dichtungsfläche (30) und eine ringförmige Stauchung (7) aufweist, wobei die Stauchung über die Dichtungsfläche (30) übersteht,
einem Halter (9) zum lösbaren Befestigen des Steckelements (6) an bzw. in dem Steckverbinderkörper, wobei der Halter (9) als Ring (14) ausgebildet ist, wobei der Halter (9) zumindest ein Halteelement (15) aufweist, welches Halteelement (15) durch eine dem Halteelement (15) zugeordnete Aussparung (17) des Steckverbinderkörpers, vorzugsweise des Kopfteils (2), greift, wobei das Halteelement (15) im montierten Zustand mit der Stauchung (7) des Steckelements (6) mit der Maßgabe zusammenwirkt, dass das Steckelement (6) in dem Steckverbinderkörper gesichert ist,
wobei der Halter (9) zumindest eine Betätigungseinrichtung aufweist, wobei durch eine Kraftbeaufschlagung der Betätigungseinrichtung der Halter (9) derart deformierbar ist, dass das Halteelement (15) in radialer Richtung von der Mittelachse (19) der Durchgangsbohrung (20) wegbewegbar ist,
**dadurch gekennzeichnet, dass**
der Halter (9) das Kopfteil (2) umgibt, wobei ein Abschnitt des Kopfteils (2) im montierten Zustand der Schnellkupplung (1) bereichsweise in das Dichtungsteil (3) eingeführt ist,

2. Schnellkupplung nach Anspruch 1, wobei der Halter (9) zwei und vorzugsweise lediglich zwei Halteelemente (15) aufweist, wobei jedem Halteelement (15) jeweils eine Aussparung (17) in dem Steckverbinderkörper zugeordnet ist, durch welche Aussparung (17) die Halteelemente (15) im montierten Zustand jeweils greifen und mit der Stauchung (7) des Steckelements (6) wechselwirken, so dass das Steckelement (6) in dem Steckverbinderkörper gesichert ist.

3. Schnellkupplung nach einem der Ansprüche 1 oder 2, wobei der Halter (9) abgesehen von dem in die Aussparung (17) bzw. von den die Aussparungen (17) des Kopfteils (2) durchdringenden Halteelements (15) bzw. Halteelementen (15) vollständig in radialer Richtung außerhalb des Steckverbinderkörpers bzw. Kopfteils (2) angeordnet ist.

4. Schnellkupplung nach einem der Ansprüche 1 bis 3, wobei das Kopfteil (2) an einem dem Dichtungsteil (3) abgewandten Ende einen die Steckelementaufnahmeöffnung (4) umlaufenden Kragen (25) aufweist, wobei der Halter (9) im montierten Zustand zwischen dem Kragen (25) und dem Dichtungsteil (3) angeordnet ist.

5. Schnellkupplung nach Anspruch 4, wobei an einem äußeren Rand einer dichtungsteilseitigen Oberfläche des Kragens (25) ein Schutzrand ausgebildet ist, welcher Schutzrand über die dichtungsteilseitige Oberfläche übersteht, wobei der Schutzrand den Halter (9) teilweise und bevorzugt lediglich teilweise verdeckt.

6. Schnellkupplung nach einem der Ansprüche 1 bis 5, wobei das Kopfteil (2) zumindest zwei Führungen (13) aufweist, zwischen welchen Führungen (13) das Halteelement (15) im montierten Zustand positioniert ist.

7. Schnellkupplung nach einem der Ansprüche 1 bis 6, wobei das Halteelement (15) eine schräg zu einer Mittelachse (20) der Durchgangsbohrung (19) orientierte Einführfläche (22) aufweist, welche Einführfläche (22) derart ausgebildet ist, dass das Halteelement (15) beim Einführen des Steckelements (6) in die Durchgangsbohrung (19) durch die Stauchung (7) radial nach außen drückbar ist.

8. Schnellkupplung nach Anspruch 7, wobei sich die Einführfläche (22) ausgehend von einem durchgangsöffnungsseitigen Ende der Einführfläche (22) hin zu einem austrittsöffnungsseitigen Ende der Einführfläche (22) in radialer Richtung schräg nach innen bzw. in Richtung der Mittelachse (20) und der Austrittsöffnung (5) der Durchgangsbohrung (9) erstreckt.

9. Schnellkupplung nach einem der Ansprüche 1 bis 8, wobei zumindest ein Halteelement (15) ein Sicherungselement aufweist, welches Sicherungselement das Halteelement (15) im montierten Zustand gegen eine von der Mittelachse (20) der Durchgangsbohrung (19) wegweisende, radiale Verlagerung sichert.

10. Schnellkupplung nach Anspruch 9, wobei das Sicherungselement als Sicherungsvorsprung (23) ausgebildet ist und wobei der Sicherungsvorsprung (23) im montierten Zustand an einer durchgangsbohrungsseitigen Ringfläche (24) des Kopfteils (2) anliegt.

11. Schnellkupplung nach einem der Ansprüche 1 bis 10, wobei das Kopfteil (2) und der Halter (9) im montierten Zustand relativ zueinander in axialer Richtung derart verschiebbar sind, dass das Sicherungselement des Halters (9) von dem Kopfteil (2), insbesondere von der Ringfläche (14) bzw. dem Kragen (25) des Kopfteils (2) lösbar ist, wobei lediglich in einem gelösten Zustand eine radiale Verlagerung des Halters (9) durch eine Kraftbeaufschlagung der Betätigungseinrichtung derart erfolgt, dass der Halter (9) die Stauchung (7) des Steckelements (6) freigibt.

12. Schnellkupplung nach einem der Ansprüche 1 bis 11, wobei das Kopfteil (2) mit dem Dichtungsteil (3) verrastet ist.

13. Schnellkupplung nach einem der Ansprüche 1 bis 12, wobei das Dichtungsteil (3) zumindest eine Rastöffnung (11) aufweist, in welche Rastöffnung (11) im montierten Zustand ein kopfteilseitiger Rastvorsprung (10) zur Sicherung des Kopfteils (2) an dem Dichtungsteil greift.

14. Schnellkupplung nach einem der Ansprüche 1 bis 13, wobei eine Wandung des Dichtungsteils (3) durchgangsbohrungsseitig zumindest ein Führungselement (12) aufweist, welches Führungselement (12) im montierten Zustand mit einem kopfteilseitigen, komplementären Führungselement (13) zur verdrehsicheren Fixierung des Kopfteils (2) in dem Dichtungsteil (3) zusammenwirkt.

## Claims

1. A quick connector coupling for establishing a separable connection in a fluid line, comprising
a connector body, wherein the connector body is formed from at least two separate parts, namely a head part (2) and a sealing part (3), wherein the connector body defines a through-bore (19), which through-bore (19) extends from a male connector element entry opening (4) on the side of the head part of the connector body up to an exit opening (5) on the side of the sealing part,
a male connector element (6), which male connector element extends in the assembled state through the male connector element entry opening (4) into the through-bore (19), wherein the male connector element (6) has a preferably cylindrical sealing surface (30) and a ring-shaped radial upsetting deformation (7), wherein the upsetting deformation protrudes beyond the sealing surface (30),
a retainer (9) for releasably securing the male connector element (6) on or in the connector body, wherein the retainer (9) is formed as a ring (14), wherein the retainer (9) has at least one retaining element (15), which retaining element reaches through a cut-out (17) of the connector body, preferably of the head part (2), which cut-out is associated with the retaining element (15), wherein the retaining element (15) interacts in the assembled state with the radial upsetting deformation (7) of the male connector element (6) providing that the male connector element (6) is secured in the connector body,
wherein the retainer (9) has at least one actuating device, wherein the retainer (9) can be deformed by a force applied by the actuating device in such a manner that the retaining element (15) can be moved away from the center axis (19) of the through-hole (20) in the radial direction,
**characterized in that**
the retainer (9) surrounds the head part (2), wherein in the assembled state of the quick connector coupling (1), a portion of the head part (2) is inserted, at least in sections, into the sealing part (3).

2. The quick connector coupling according to claim 1, wherein the retainer (9) has two, and preferably only two retaining elements (15), wherein each retaining element (15) is assigned in each case one cut-out (17) in the connector body, through which cut-out (17) the retaining elements (15) in each case reach through and interact with the radial upsetting deformation (7) of the male connector elements (6) so that the male connector element (6) is secured in the connector body.

3. The quick connector coupling according to any one of claims 1 or 2, wherein the retainer (9), except for the retaining element (15) or retaining elements (15) penetrating the cut-out (17) or the cut-outs (17) of the head part (2), is arranged completely outside of the connector body or head part (2) in the radial direction.

4. The quick connector coupling according to any one of claims 1 to 3, wherein, at an end facing away from the sealing part (3), the head part (2) has a collar (25) extending around the male connector element opening (4), wherein the retainer (9) is arranged in the assembled state between the collar (25) and the sealing part (3).

5. The quick connector coupling according to claim 4, wherein a protective rim is formed at an outer edge of the surface of the collar on the side of the part side (25), which protective rim protrudes beyond the surface on the side of the sealing part, wherein the protective rim partially and preferably only partially covers the retainer (9).

6. The quick connector coupling according to any one of claims 1 to 5, wherein the head part (2) has at least two guides (13), between which guides (13) the retaining element (15) is positioned in the assembled state.

7. The quick connector according to any one of claims 1 to 6, wherein the retaining element (15) has an insertion surface (22) which is oriented obliquely relative to a center axis (20) of the through-bore (19), which insertion surface (22) is formed such, that when inserting the male connector element (6) into the through-bore (19), the retaining element (15) can be pushed radially outwards by the radial upsetting deformation (7).

8. The quick connector coupling according to claim 7, wherein the insertion surface (22), starting from an end of the insertion surface (22) on the side of the trough-opening, extends towards an end of the insertion surface (22) on the side of the exit opening in the radial direction obliquely inwards or towards the center axis (20) and the exit opening (5) of the through-bore (9).

9. The quick connector coupling according to any one of claims 1 to 8, wherein at least one retaining element (15) has a security element, which security element secures the retaining element (15) in the assembled state against a radial displacement directed away from the center axis (20) of the through-bore (19).

10. The quick connector coupling according to claim 9, wherein the security element is formed as a security protrusion (23) and wherein the security protrusion (23) rests in the assembled state against a ring surface (24) of the head part (2) on the side of the through-bore.

11. The quick connector coupling according to any one of claims 1 to 10, wherein in the assembled state, the head part (2) and the retainer (9) can be displaced relative to one another in the axial direction in such a manner that the security element of the retainer (9) can be detached from the head part (2), in particular from the ring surface (14) or the collar (25) of the head part (2), wherein a radial displacement of the retainer (9) takes place only in a detached state by force application of the actuating device in such a manner that the retainer (9) releases the radial upsetting deformation (7) of the male connector element (6).

12. The quick connector coupling according to any one of claims 1 to 11, wherein the head part (2) is interlocked with the sealing part (3).

13. The quick connector coupling according to any one of claims 1 to 12, wherein the sealing part (3) has at least one locking opening (11), in which locking opening (11) a locking protrusion (10) on the side of the head part engages in the assembled state for securing the head part (2) on the sealing part.

14. The quick connector according to any one of claims 1 to 13, wherein a wall of the sealing part (3) has at least one guiding element (12) on the side of the through-bore, which guiding element (12) interacts in the assembled state with a complementary guiding element (13) on the side of the head part for fixing the head part (2) in the sealing part (3) in a non-rotatable manner.

## Revendications

1. Accouplement rapide pour réaliser une liaison séparable dans une conduite de fluide avec
un corps de raccord enfichable, le corps de raccord enfichable étant formé au moins de deux pièces séparées, notamment une pièce de tête (2) et une pièce d'étanchéité (3), le corps de raccord enfichable définissant un trou de passage (19), lequel trou de passage (19) s'étend d'une ouverture de réception d'élément enfichable (4) du corps de raccord enfichable jusqu'à une ouverture de sortie (5) du côté de la pièce d'étanchéité,
un élément enfichable (6), lequel élément enfichable s'étend à l'état monté à travers l'ouverture de réception d'élément enfichable (4) dans le trou de passage (19), l'élément enfichable (6) comportant une surface d'étanchéité (30) de préférence cylindrique et une bordure annulaire (7), la bordure dépassant au-dessus de la surface d'étanchéité (30),
un support (9) pour fixer de façon amovible l'élément enfichable (6) sur ou dans le corps de raccord enfichable,, le support (9) étant constitué comme une bague (14), le support (9) comportant au moins un élément de support (15), lequel élément de support (15) vient en prise à travers un évidement (17) affecté à l'élément de support (15) du corps de raccord enfichable, de préférence de la pièce de tête (2), affecté à l'élément de support (15), l'élément de support (15) coopérant à l'état monté avec la bordure (7) de l'élément enfichable (6) à condition que l'élément enfichable (6) soit fixé dans le corps de raccord enfichable,
le support (9) comportant au moins un dispositif de manoeuvre, le support (9) pouvant être déformé par application d'une force du dispositif de manoeuvre de telle manière que l'élément de support (15) puisse être éloigné dans le sens radial de l'axe médian (19) du trou de passage (20),
**caractérisé en ce que**
le support (9) entoure la pièce de tête (2), une section de la pièce de tête (2) étant introduite à l'état monté de l'accouplement rapide (1) en partie dans la pièce d'étanchéité (3).

2. Accouplement rapide selon la revendication 1, le support (9) comportant deux et de préférence seulement deux éléments de supports (15), un évidement (17) dans le corps de raccord enfichable étant respectivement attribué à chaque élément de support (15), évidement (17) à travers le lequel les éléments de support (15) viennent respectivement en prise à l'état monté et interagissent avec la bordure (7) de l'élément enfichable (6) de telle manière que l'élément enfichable (6) est fixé dans le corps de raccord enfichable.

3. Accouplement rapide selon l'une quelconque des revendications 1 ou 2, le support (9) est complètement disposé dans le sens radial en dehors du corps de raccord enfichable ou de la pièce de tête (2), sans tenir compte de l'élément de support (15) ou des éléments de support (15) traversant l'évidement (17) ou les évidements (17) de la pièce de tête (2).

4. Accouplement rapide selon l'une quelconque des revendications 1 à 3, la pièce de tête (2) comportant sur une extrémité opposée à la pièce d'étanchéité (3) un collet (25) entourant l'ouverture de réception d'élément enfichable (4), le support (9) étant disposé à l'état monté entre le collet (25) et la pièce d'étanchéité (3).

5. Accouplement rapide selon la revendication 4, un bord de protection étant constitué sur un bord extérieur d'une surface du collet (25) du côté de la pièce d'étanchéité, lequel bord de protection dépasse au-dessus de la surface du côté de la pièce d'étanchéité, le bord de protection ne recouvrant partiellement et de préférence qu'en partie le support (9).

6. Accouplement rapide selon l'une quelconque des revendications 1 à 5, la pièce de tête (2) comportant au moins deux guidages (13), guidages (13) entre lesquels l'élément de support (15) est positionné à l'état monté.

7. Accouplement rapide selon l'une quelconque des revendications 1 à 6, l'élément de support (15) comportant une surface d'introduction (22) orientée en diagonale par rapport à un axe médian (20) du trou de passage (19), laquelle surface d'introduction (22) étant constituée de telle manière que l'élément de support (15) peut être poussé radialement vers l'extérieur par la bordure (7) lors de l'introduction de l'élément enfichable (6) dans le trou de passage (19).

8. Accouplement rapide selon la revendication 7, la surface d'introduction (22) s'étendant en partant d'une extrémité de la surface d'introduction (22) du côté de l'ouverture de passage vers une extrémité du côté de l'ouverture de sortie de la surface d'introduction (22) dans un sens radial en diagonale vers l'intérieur ou en direction de l'axe médian (20) et de l'ouverture de sortie (5) du trou de passage (9).

9. Accouplement rapide selon l'une quelconque des revendications 1 à 8, un élément de support (15) comportant au moins un élément de sécurité, lequel élément de sécurité sécurisant à l'état monté l'élément de support (15) contre un déplacement radial s'écartant de l'axe médian (20) du trou de passage (19).

10. Accouplement rapide selon la revendication 9, l'élément de sécurité étant constitué comme saillie de sécurité (23) et la saillie de sécurité (23) s'appliquant à l'état monté sur une surface annulaire (24) du côté du trou de passage de la pièce de tête (2).

11. Accouplement rapide selon l'une quelconque des revendications 1 à 10, la pièce de tête (2) et le support (9) pouvant être déplacés à l'état monté l'un par rapport à l'autre dans le sens radial de telle manière que l'élément de sécurité du support (9) peut être déplacé de la pièce de tête (2), notamment de la surface annuaire (14) ou du collet (25) de la pièce de tête (2), un déplacement radial du support (9) n'ayant lieu dans un état séparé que par une application de force du dispositif de manoeuvre de telle manière que le support (9) libère la bordure (7) de l'élément enfichable (6).

12. Accouplement rapide selon l'une quelconque des revendications 1 à 11, la partie de tête (2) étant enclenchée avec la pièce d'étanchéité (3).

13. Accouplement rapide selon l'une quelconque des revendications 1 à 12, la pièce d'étanchéité (3) comportant au moins une ouverture d'enclenchement (11), ouverture d'enclenchement (11) dans laquelle à l'état monté vient en prise sur la pièce d'étanchéité une saillie d'enclenchement (10) du côté de la pièce de tête pour fixer la pièce de tête (2).

14. Accouplement rapide selon l'une quelconque des revendications 1 à 13, une paroi de la pièce d'étanchéité (3) comportant au moins du côté du trou de passage un élément de guidage (12), lequel élément de guidage (12) coopère à l'état monté avec un élément de guidage (13) complémentaire, du côté de la pièce de tête, pour fixer solidairement en rotation la pièce de tête (2) dans la pièce d'étanchéité (3).
